# EUROPEAN PATENT SPECIFICATION

(11) **EP 1 295 189 B1**
(45) Date of publication and mention of the grant of the patent: **16.06.2004**
(21) Application number: 01944834.9
(22) Date of filing: 22.06.2001
(51) Int. Cl.: G05D 7/01, G05D 7/06

(54) **GAS FLOW REGULATION SYSTEM**
VORRICHTUNG ZUM REGELN EINES GASDURCHFLUSSES
SYSTEME DE REGULATION DE DEBIT GAZEUX

(30) Priority: 23.06.2000 CA 2312122
(43) Date of publication of application: 26.03.2003
(73) Proprietor: Teleflex GFI Control Systems L.P., Kitchener, Ontario N2K 2Z3 (CA)
(72) Inventor: GIROUARD, Erick, Guelph, Ontario N1G 4G5 (CA)
(74) Representative: Leonhard, Frank Reimund, Dipl.-Ing.
(86) International application number: PCT/CA2001/000901
(87) International publication number: WO 2002/001306

(56) References cited:
- BE-A- 387 342
- DE-A- 4 445 588
- US-A- 4 352 372
- US-A- 6 041 762

## Description

### FIELD OF INVENTION

The present invention relates to gas flow regulation systems for controlling the flow of gas, and more particularly relates to tank-mounted modules for controlling the flow of high pressure gaseous fuels such as compressed or liquified natural gas or hydrogen from a storage tank.

### BACKGROUND OF THE INVENTION

It is becoming increasingly common to use so-called alternative fuels, such as propane or natural gas, in internal combustion engines or hydrogen in fuel cells. Often such engines are converted to use one or two or more sources of fuel, such as gasoline and natural gas. The operator has the ability to switch between sources depending on the availability and price of these fuels.

Many vehicles are manufactured to operate on gasoline only and are converted to run on two or more fuels. The vehicles are manufactured with storage tanks for gasoline, pumps for moving the gasoline from the tank to the engine, and carburetors or fuel injectors for introducing the fuel and the required amount of air for combustion into the engine.

Gaseous fuels such as propane, natural gas, and hydrogen must be stored in pressurized cylinders to compress the gas into a manageable volume. Increasing the pressure to the highest level that can safely be handled by the pressurized storage cylinder increases the amount of fuel that can be stored in that cylinder and extends the distance that the vehicle can be driven to its maximum. Typical storage cylinder pressures range from about 14 MPa to 34 MPa (2000 to 5000 psig).

Internal combustion engines cannot operate at such a high pressure, and the pressure of the gas must be reduced to a level at which the engine can be operated safely.

The pressure must also be regulated as it is reduced to ensure that the pressure of the fuel entering the engine is nearly constant even as the pressure in the storage cylinder is reduced. At the same time, the pressure regulation must permit as much gas as possible to be removed from the storage cylinder, and thus permit the pressure in the storage cylinder to fall to as close to the operating pressure as possible. A high pressure difference across the pressure regulator means that unused fuel remains in the storage cylinder and is unavailable to the engine.

Conventional pressure regulators having one or more stages over which the pressure is reduced are well-known and have long been used to reduce the pressure and regulate the flow of compressed gases. Some of these are known as pressure-balanced regulators and use various arrangements of springs, diaphragms and machined parts to balance pressures and fluid flow over the various stages of the regulator.

One major concern is the vulnerability of flow components carrying alternate fuels, including pressure regulators, to crash damage. If the vehicle is involved in an accident, such components must not fail in an unsafe or catastrophic manner. To this end, internally-mounted pressure regulators have been designed to mitigate such unsafe or catastrophic conditions. An example of such pressure regulators is disclosed in Sirosh et al., U.S. Patent 6,041,762.

Although Sirosh's pressure regulator can be internally mounted within a single nozzle in a storage cylinder, the space occupied by such regulator prevents, as a practical matter, the further internal mounting of a solenoid shut off valve within the same nozzle to open and close flow to the pressure regulator or the further internal mounting of a second regulator stage. The size of the nozzle could be increased to accommodate the solenoid shut off valve or a second regulator stage. However, such design changes would reduce the pressure rating of the associated storage cylinder, thereby preventing its use in storing high pressure gases.

### SUMMARY OF THE INVENTION

In a broad aspect, the present invention provides a gas flow regulation module comprising a module housing, including a longitudinal axis, and including a first port and a second port, a first fluid passage extending from the first port, and a second fluid passage extending from the second port; and a regulator, mounted to the body and disposed in communication with the first and second fluid passages, including a moveable pressure boundary member characterized by a transverse axis which is transverse to the longitudinal axis of the module housing.

In a further aspect, the present invention provides a gas flow regulation module comprising a module housing, including a longitudinal axis, a first port and a second port, a first fluid passage extending from the first port, and a second fluid passage extending from the second port and a regulator, mounted to the body and disposed in communication with the first and second fluid passages, including a moveable pressure boundary member substantially disposed in a plane which is substantially parallel to the longitudinal axis of the module housing.

In yet a further aspect, the present invention provides a gas flow regulation module, adapted for mounting within a pressure vessel and through a nozzle provided in the pressure vessel, the pressure vessel including an interior, the nozzle including a longitudinal axis, comprising a module housing, including a first port and a second port, a first fluid passage extending from the first port and a second fluid passage extending from the second port and a regulator mounted to the body and disposed in the interior of the pressure vessel and in communication with the first and second fluid passages, including a moveable pressure boundary member characterized by a transverse axis which is perpendicular to the longitudinal axis of the nozzle.

In yet another aspect, the present invention provides a gas flow regulator module, configured for mounting within a pressure vessel, and through a nozzle provided in the pressure vessel, the pressure vessel including an interior, the nozzle including a longitudinal axis, comprising a module housing, including a first and a second port, a first fluid passage extending from the first port, and a second fluid passage extending from the second port and a regulator mounted to the body and disposed in the interior of the pressure vessel and in communication with the first and second fluid passages, the regulator including a moveable pressure boundary member substantially disposed in a plane which is substantially parallel to the longitudinal axis of the nozzle.

In yet another aspect, the present invention provides a gas flow regulation module comprising an elongated body including a longitudinal axis, a fluid passage disposed within the body, a valve seat disposed within the fluid passage, an orifice disposed within the valve seat, a valve, configured to seal the orifice, and a moveable pressure boundary member, coupled to the valve, and characterized by a transverse axis which is transverse to the longitudinal axis of the body.

In yet a further aspect, the present invention provides a gas flow regulation module, configured for mounting within a pressure vessel, and through a nozzle provided in the pressure vessel, the nozzle including a longitudinal axis, comprising an elongated body, a fluid passage disposed within the body a valve seat disposed within the fluid passage, an orifice formed within the valve seat, a valve, configured to seal the orifice, and a moveable pressure boundary member, coupled to the valve, and characterized by a transverse axis which is transverse to the longitudinal axis of the nozzle.

In yet a further aspect, the present invention provides a gas flow regulation module, configured for mounting within a pressure vessel, and through a nozzle provided in the pressure vessel, the nozzle including a first diameter, comprising a fluid passage, a valve seat disposed within the fluid passage, an orifice formed in the valve seat, a valve configured to seal the orifice, and a moveable pressure boundary member, coupled to the valve, including a second diameter which is greater than the first diameter.

In yet a further aspect, the present invention provides a gas flow regulation module, configured for mounting within apressure vessel, and through a nozzle provided in the pressure vessel, the nozzle including a longitudinal axis, comprising a fluid passage, a valve seat disposed within the fluid passage, an orifice formed in the valve seat, a valve configured to seal the orifice, and a moveable pressure boundary member, coupled to the valve, and substantially disposed in a plane which is substantially parallel to the longitudinal axis of the nozzle, wherein the moveable pressure boundary member is configured for insertion through the nozzle.

By orienting the moveable pressure boundary of the regulator in this manner, the module can further include a solenoid shut-off valve or a second regulator stage without requiring large nozzles to fit such an assembly in the interior of a pressure vessel.

### BRIEF DESCRIPTION OF THE DRAWINGS

The invention will be better understood and objects other than those set forth above will become apparent when consideration is given to the following detailed description thereof. Such description makes reference to the annexed drawings wherein:
**Figure 1** is a side elevation view of an embodiment of the present invention;

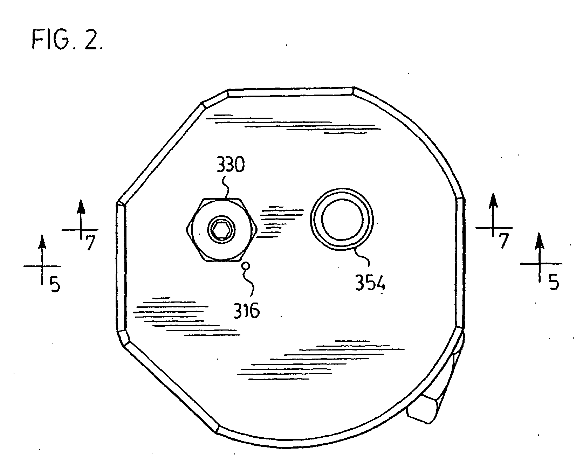

**Figure 2** is a top plan view of the embodiment of the present invention illustrated in Figure 1;
**Figure 3** is a sectional elevation view of a regulator of the embodiment of the present invention illustrated in Figure 1;
**Figure 4** is a cut-away sectional elevation view of the pressure regulator in Figure 3, showing components in the vicinity of the convolution of the diaphragm;
**Figure 5** is a sectional elevation view of the embodiment of the present invention illustrated in Figure 1;
**Figure 6** is a cut-away sectional elevation view of the regulator in Figure 5, showing each of the individual stages of the regulator;
**Figure 7** is a second sectional elevation view of the embodiment of the present invention illustrated in Figure 1;
**Figure 8** is a sectional elevation view of the solenoid shut-off valve of an embodiment of the present invention, showing the solenoid shut-off valve in a closed position;
**Figure 9** is a sectional elevation view ofthe solenoid shut-off valve of an embodiment of the present invention, showing the shut-off valve in a transition position;
**Figure 10** is a sectional elevation view of the solenoid shut-off valve of an embodiment of the present invention, showing the shut-off valve in an open position;
**Figure 11** is a schematic showing the flow path taken through a shut-off valve of an embodiment of the present invention during filling of a pressure vessel with a gaseous mixture;
**Figure 12** is a schematic drawing showing manual shut-off valve blocking floor between a solenoid shut-off valve and a regulator of an embodiment of the present invention;
**Figure 13** is a sectional plan view of the embodiment of the present invention illustrated in Figure 1; and
**Figure 14** is a schematic illustration of the process flow paths provided in an embodiment of the present invention.

### DETAILED DESCRIPTION

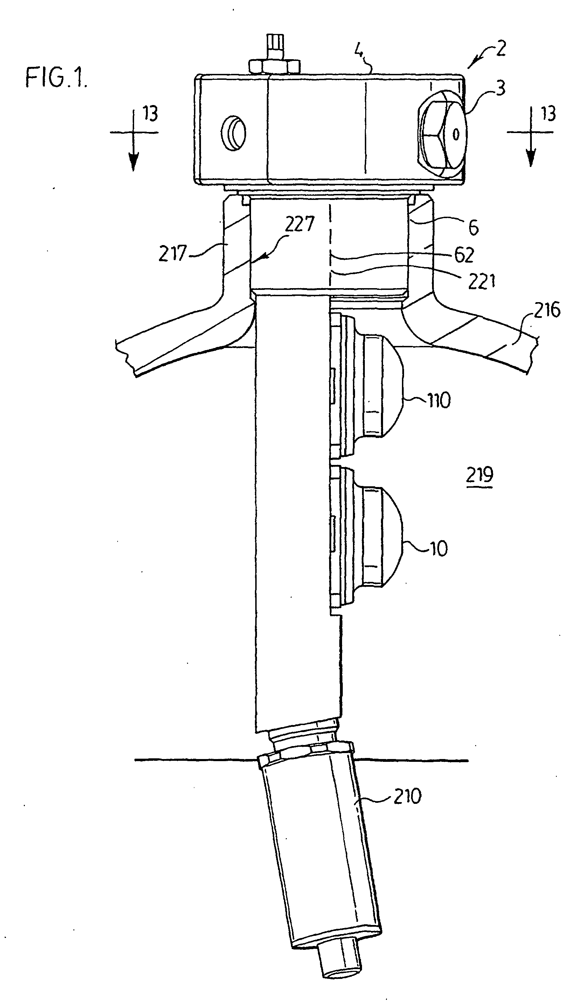

**Figure 1** illustrates an embodiment of a gas flow regulation module (2) of the present invention. Module (2) comprises a body (3) including a head (4) and an elongated neck (6) extending therefrom. Pressure regulators (10) and (110), and solenoid shut off valve (210) are formed within neck (6) to control flow of gas from a pressure vessel (216). In this respect, module (2) functions as a housing for pressure regulators (10) and (110) and solenoid shut offvalve (210).

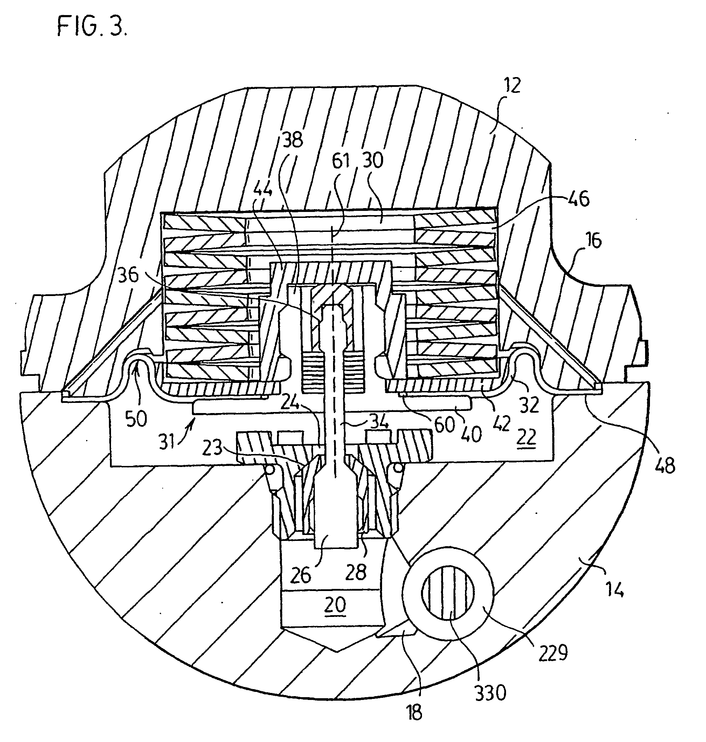

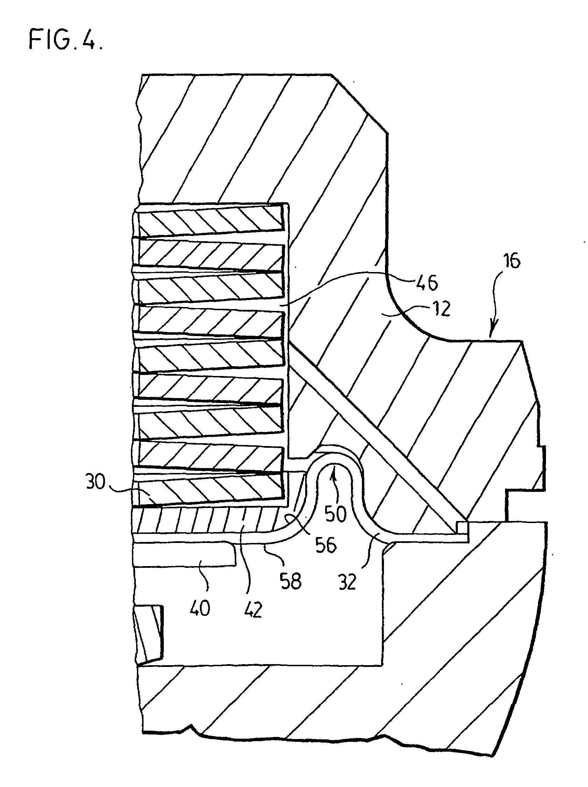

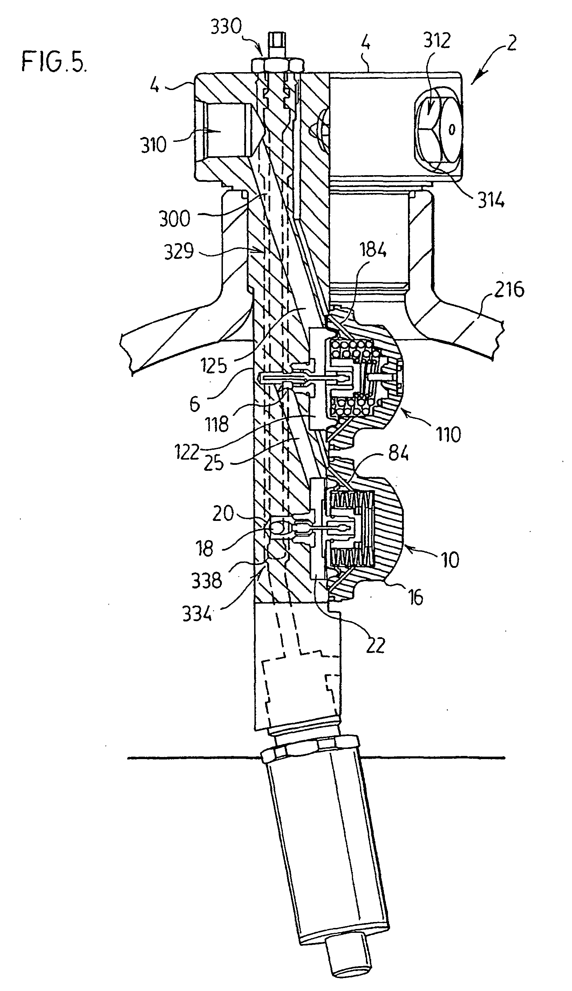

Referring to **Figures 3 and 4**, pressure regulator (10) includes spring housing (12) mounted to base (14) to form regulator housing (16). Housing (16) includes an inlet port (18) communicating with a pintle chamber (20). Pintle chamber (20) communicates with output chamber (22) and includes a valve seat (23) with orifice (24). Valve pintle (26) is disposed within pintle chamber (20) and includes sealing surface (28) to press against valve seat (23) and thereby close orifice (24). Output chamber (22) communicates with outlet port (25) formed within housing (16) (see Figure 5).

Valve pintle (26) is movable to open and close orifice (24) in response to the combined action of spring (30) and moveable pressure boundary member (31). Spring (30) is provided within housing (16) to exert a force which tends to move the valve pintle (26) towards an open position wherein sealing surface (28) is unseated from valve seat (23), thereby opening orifice (24) into communication with output chamber (22). Gas pressure in pintle chamber (20) and output chamber (22) acts against moveable pressure boundary member (31) and valve pintle (26) thereby opposing forces exerted by spring (30) and tending to move valve pintle (26) towards a closed position, wherein sealing surface (28) is pressed against valve seat (23), thereby closing orifice (24). Pintle stem (34) extends from valve pintle (26), terminating in pintle nut (36). Pintle nut (36) is mounted within central boss (38). Central boss (38) extends through the centre of moveable pressure boundary (31). A locking ring (44) fits over central boss (38) and bears down upon moveable pressure boundary member (31).

Spring (30) is fitted over locking ring (44), and is supported on moveable pressure boundary member (42). Spring (30) is retained within a spring chamber (46) formed within housing (16). Spring (30) can include coil springs, spring washers, or elastomeric-type springs.

In one embodiment, moveable pressure boundary member is a diaphragm assembly comprising a diaphragm (32), first diaphragm plate (40) and diaphragm support plate (42). Diaphragm (32) is mounted on a first diaphragm plate (40) disposed on one side of diaphragm (32) and extending from central boss (38). The diaphragm (32) is retained on the first diaphragm plate (40) by means of a diaphragm support plate (42) and a locking ring (44). As such, diaphragm (32) is interposed and pinched between first diaphragm plate (40) and diaphragm support plate (42). Groove (48) is formed within housing (16) to receive diaphragm (32), thereby securing diaphragm (32) to housing (16). In this respect, diaphragm (32) seals output chamber (22) from spring chamber (46), thereby isolating output chamber (22) from spring chamber (46). Diaphragm (32) is generally characterized by a flat profile. Diaphragm (32) includes a first side surface (56) and second side surface (58) (see Figure 4). First side surface (56) is exposed to gas within output chamber (22). Diaphragm (32) further includes a throughbore (60) which receives central boss (38). In one embodiment, diaphragm (32) includes a rolling convolution (50) extending from a section (52) characterized by a flat profile, to provide a modification in the behaviour of diaphragm (32). Specifically, this design attempts to ensure that diaphragm (32) is always in tension (i.e., never in shear or compression). Thus, as the convolution rolls, diaphragm (32) is never stretched or buckled (i.e., largely eliminating hysteresis).

Pressure regulator (10) is characterized by an orientation wherein the transverse axis (61) of moveable pressure boundary member (31) is transverse to the longitudinal axis (62) of neck (6) (see Figure 1). In one embodiment, the transverse axis (61) is perpendicular to the longitudinal axis (62) of neck (6). As a further incident, moveable pressure boundary member (31) lies or is disposed substantially in a plane which is substantially parallel to the longitudinal axis (62) of neck (6). Such orientation permits the insertion of module (2) , including a regulator, with a relatively larger diameter moveable pressure boundary member (31), into a small diameter nozzle (217) of a pressure vessel (216) (see Figures 1, 5 and 7).

In another embodiment, moveable pressure boundary (31) is characterized by a diameter which is larger than the diameter of nozzle (217). Further, in yet another embodiment, moveable pressure boundary (31) is characterized by a maximum diameter which is larger than the diameter of nozzle (217). In either case, by virtue of the orientation of the moveable pressure boundary (31) relative to nozzle (217), module (2) is configured for insertion into nozzle (217). In particular, moveable pressure boundary (31), by virtue of its orientation, is configured for insertion through the nozzle by virtue of its orientation, and notwithstanding its dimensions relative to the nozzle (217).

Use of larger diameter moveable pressure boundary members (31) in pressure regulators is desirable so that the pressure boundary member is more sensitive to pressure changes in the output chamber (22), thereby providing a more accurate response to these pressure changes and mitigating droop. Because moveable pressure boundary member (31) is oriented in this fashion, more space is available within module (2) for the formation of various flow passages necessary for permitting internal mounting of a solenoid shut-off valve (210) in conjunction with a regulator.

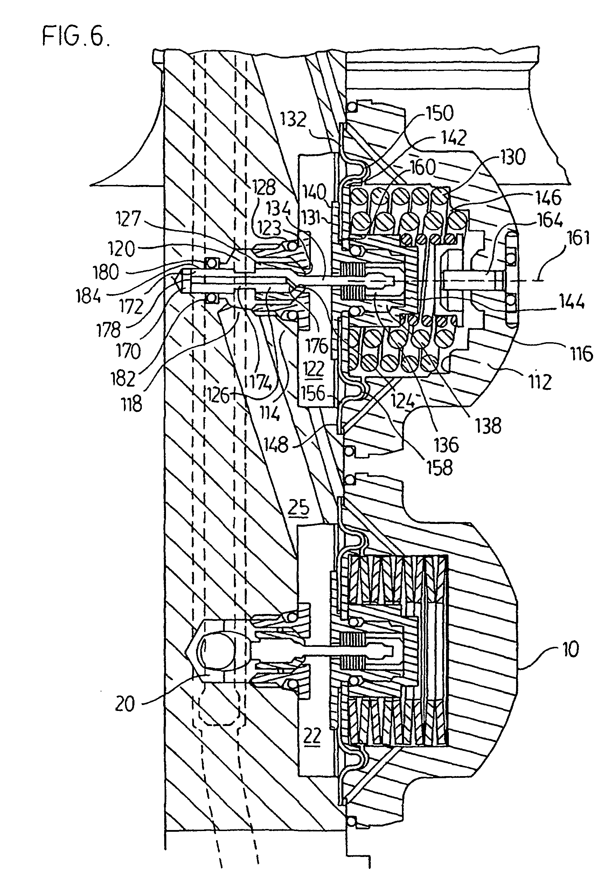

Output port (25) can be adapted to communicate with an inlet port (118) of a second stage pressure regulator (110), as illustrated in Figures 5 and 6. In one embodiment, pressure regulator (110) is a balanced pressure regulator. Pressure regulator (110) includes spring housing (112) mounted to base (114) to form regulator housing (116). Housing (116) includes an inlet port (118) communicating with a pintle chamber (120). Pintle chamber (120) communicates with output chamber (122) and includes a valve seat (123) with orifice (124). Valve pintle (126) is disposed within pintle chamber (120) and includes a sealing member (127) with a sealing surface (128) to press against valve seat (123) and thereby close orifice (124). Output chamber (122) communicates with output port (123) formed within housing (116).

Valve pintle (126) is movable to open and close orifice (124) in response to the combined action of spring (130) and diaphragm (132). Spring (130) is provided within housing (116) to exert a force which tends to move the valve pintle (126) towards an open position wherein sealing surface (128) is unseated from valve seat (123), thereby opening orifice (124) into communication with output chamber (122). Gas pressure in pintle chamber (120) and output chamber (122) acts against moveable pressure boundary member (131) and valve pintle (126) thereby opposing forces exerted by spring (130) and tending to move valve pintle (126) towards a closed position, wherein sealing surface (128) is pressed against valve seat (123), thereby closing orifice (124). Pintle stem (134) extends from valve pintle (126), terminating in pintle nut (136). Pintle nut (136) is mounted within central boss (138). Central boss (138) extends through the centre of moveable pressure boundary member (131). A locking ring (144) fits over central boss (138) and bears down upon moveable pressure boundary member (131).

Pressure regulator (110) is a balanced regulator with features provided to mitigate pressure imbalances which are attributable to unsteady state conditions, such as source pressure variability in pintle chamber (120). In this respect, regulator (110) is further provided with a balancing chamber (170) extending and sealed from pintle chamber (120). Valve pintle (126) includes balancing stem (172) extending from sealing member (127) and disposed within balancing chamber (170). Valve pintle (126) further includes a throughbore (174) extending between ports (176) and (178) provided in the surface of valve pintle (126). Port (176) opens into communication with output chamber (122). Port (178) opens into communication with balancing chamber (170). Balancing chamber (170) is sealed from pintle chamber (120) by sealing member (180), such as an o-ring, which is carried within a groove (182) provided within internal surface (184) of balancing chamber (170). By virtue of this arrangement, balancing chamber (170) is in direct communication with output chamber (122). To mitigate the effects of pressure variability within pintle chamber (120) on the regulation of pressure by the combined action of diaphragm assembly (131) and valve pintle (126), the cross-sectional area of balancing stem is made substantially the same as the seating area of sealing surface (128). This substantially reduces the significance ofpressure in pintle chamber (120) on the regulatory function of diaphragm assembly (131) and valve pintle (126).

Spring (130) is fitted over locking ring (144), and is supported on diaphragm support plate (142). Spring (130) is retained within a spring chamber (146) formed within housing (116). Spring (130) can include coil springs, spring washers, or elastomeric-type springs.

In one embodiment, moveable pressure boundary member (131) is a diaphragm assembly comprising diaphragm (132), first diaphragm plate (140), and diaphragm support plate (142). Diaphragm (132) is mounted on a first diaphragm plate (40) disposed on one side of diaphragm (132) and extending from central boss (138). The diaphragm (132) is retained on the first diaphragm plate (140) by means of a diaphragm support plate (142) and a locking ring (144). As such, diaphragm (132) is interposed and pinched between first diaphragm plate (140) and diaphragm support plate (142). Groove (148) is formed within housing (116) to receive diaphragm (132), thereby securing diaphragm (132) to housing (116). In this respect, diaphragm (132) seals output chamber (122) from spring chamber (146), thereby isolating output chamber (122) from spring chamber (146). Diaphragm (132) is generally characterized by a flat profile. Diaphragm (132) includes a first side surface (156) and second side surface (158). First side surface (156) is exposed to gas within output chamber (122). Diaphragm (132) further includes a throughbore (160) which receives central boss (138). In one embodiment, diaphragm (132) includes a rolling convolution (150) extending from a section (152) characterized by a flat profile, to provide a modification in the behaviour of diaphragm (132). Specifically, this design attempts to ensure that diaphragm (132) is always in tension (i.e., never in shear or compression). Thus, as the convolution rolls, diaphragm (132) is never stretched or buckled (i.e., largely eliminating hysteresis)

Like pressure regulator (10), pressure regulator (110) is characterized by an orientation wherein transverse axis (161) of moveable pressure boundary member (131) is transverse to longitudinal axis (62) of neck (6). As a further incident, moveable pressure boundary member (131) lies or is disposed substantially in a plane which is parallel to the longitudinal axis (62) of neck (6). Such orientation permits the use of a relatively larger moveable pressure boundary member (132) within module (2) where it is desired to minimize the diameter or width of neck (6). Use of larger diameter moveable pressure boundary members (131) in pressure regulators is desirable so that the pressure boundary member is more sensitive to pressure changes in the output chamber (122), thereby providing a more accurate response to these pressure changes and changes and mitigating droop. Because moveable pressure boundary member (131) is oriented in this fashion, more space is available within module (2) for the formation of various flow passages necessary for permitting internal mounting of a solenoid shut-off valve in conjunction with a regulator.

In one embodiment an adjustable member, such as a screw (164), is provided and extends through housing (116) to regulate compression of associated spring (130), thereby varying flow control characteristics of valve pintle (126).

A vent passage (84) is also formed within housing (16) to communicate with spring chamber (46). Any gas leaking across diaphragm (3) from output chamber (22) and into spring chamber (46) is thereby vented to prevent accumulation of gas within spring chamber (46). Where pressure regulation is accomplished by first and second stage regulators (10) and (100) in series, spring chamber (46) of first stage regulator (10) vents to output chamber (122) of second stage regulator (110), while spring chamber (146) of second stage regulator (110) vents via passage (184) to atmosphere via port (316) formed within head (4).

In one embodiment, gas within vessel (216) is characterized by a pressure of about 5000 psig. As gas flows across first stage regulator (10), pressure is dropped to about 300 to 500 psig. Pressure is further reduced through second stage regulator (110) such that pressure in output chamber (122) is about 115 psig.

Referring to **Figures 5, 13 and 14,** gas flowing from a second stage regulator (110) through outlet port (125) is connected to outlet passage (300) which communicates with outlet port (310) formed within head (4). Optionally connected to outlet passage (3 00) is a pressure relief device (312) installed in port (314) in head (4). Pressure relieve device (312) vents to a relief outlet connection (313).

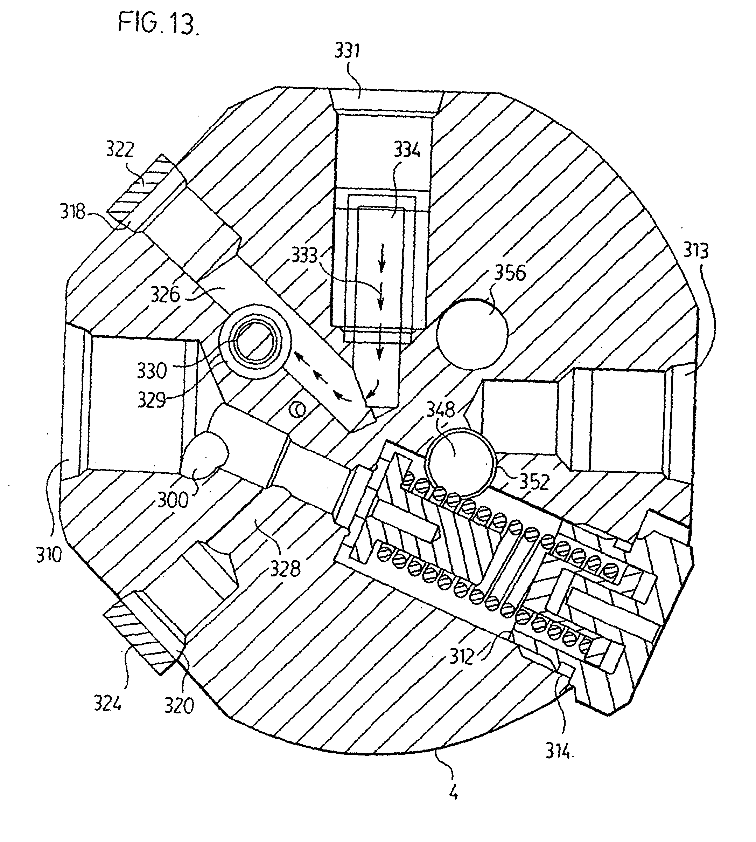

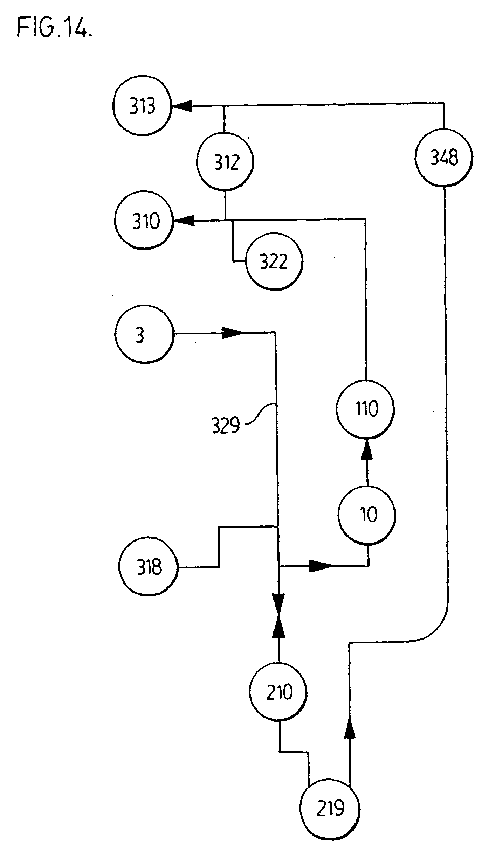

Sensor ports (318) and (320) can also be formed within head (4) for receiving installation of high pressure and low pressure sensors (322) and (324) respectively. High pressure sensor (322) senses pressure within fluid passage (64), which connects inlet port (18) of regulator (10) with outlet port (218) of solenoid shut off valve (210) (see **Figures 13 and 14).** High pressure sensor (322), therefore, measures gas pressure entering regulator (10). In this respect, throughbore (326) connects sensor (318) to throughbore (329). On the other hand, low pressure sensor (324) senses pressure within outlet passage (300) and, therefore, measures gas pressure leaving the regulator assembly (10) and (110). In this respect, throughbore (328) connects sensor port (320) to outlet passage (300).

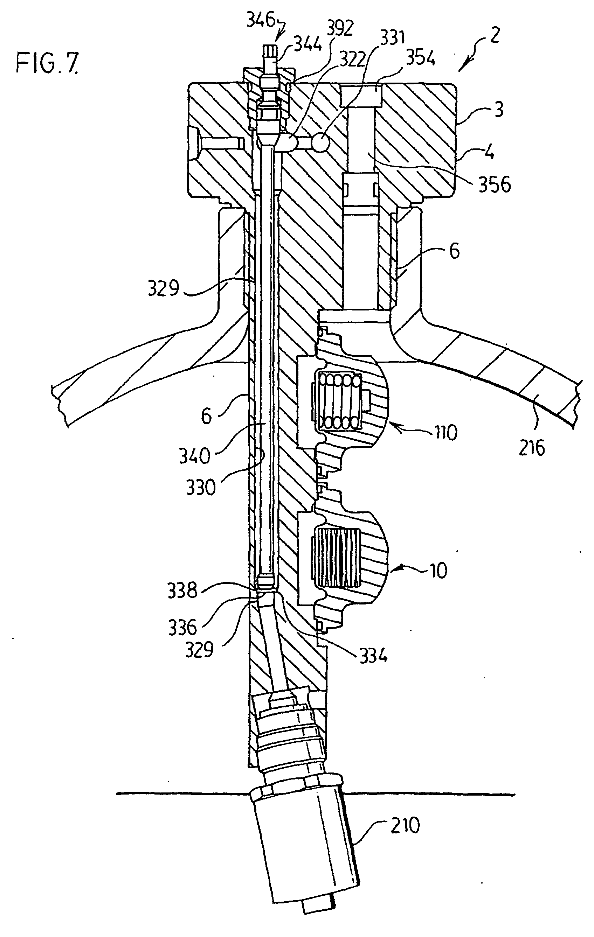

As illustrated in **Figure 5,** inlet port (18) communicates with high pressure gas stored in pressure vessel (216) through solenoid shut offvalve (210). Solenoid shut off valve (210) controls gaseous flow out of pressure vessel (216). Solenoid shut off valve (210) includes an inlet port (220) and an outlet port (218). Outlet port (218) communicates with inlet port (18) of regulator (10) via a fluid passage (64). A manual shut-off valve (330) (see **Figures 5 and 7**) is provided to interrupt flow between solenoid shut off valve (210) and inlet port (18).

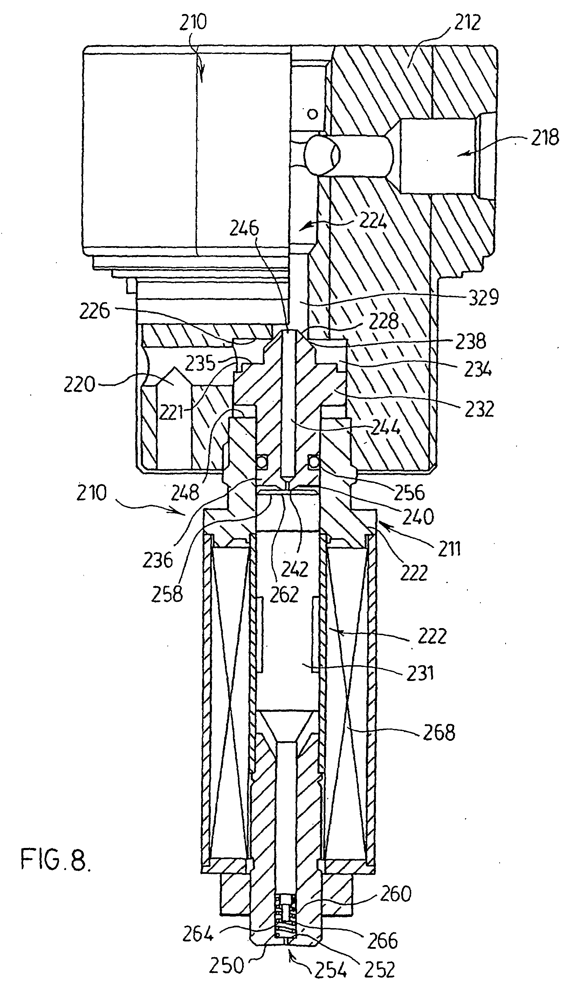

In one embodiment, solenoid shut-off valve (210) is an instant-on type valve. Referring to Figure 8, instant-on valve (210) includes a valve body (212) configured for mounting within a nozzle (217) of a pressure vessel (216). The pressure vessel (216) includes a storage volume (216). Valve body (212) includes an outlet port (218) and an inlet port (220). A flow passage (224) extends from the outlet port (218) and through the valve body (212) and is in communication with inlet port (220). A valve seat (226) is provided in flow passage (224). Valve seat (226) defines an orifice (228). Bore (229) extends between outlet port (218) and orifice (228) and forms part of flow passage (224).

Valve body (210) includes a conduit (211). Conduit (211) includes a first conduit orifice (254), a second conduit orifice (221), and a third conduit orifice (228). Second conduit orifice (221) functions as inlet port (220).

Conduit (211) includes a sleeve (222). Primary piston (232) and secondary piston (231) are disposed and slidably carried within sleeve (222) of conduit (211), and are moveable therein. Secondary piston (231) is interposed between primary piston (232) and first conduit orifice (254). Sleeve (222) includes a first end (248) and a second end (250). First end (248) is open for communication with flow passage (224). Second end (250) includes a valve seat (252) with orifice (254) formed therein. Sidewalls (251) extend from valve seat (252) and terminate at a distal end (253) whereby second end (250) is defined. Sleeve (222) communicates with pressure vessel (216) via orifice (254).

Primary piston (232) includes a body (233) comprising a first end (234) and a second end (236). Primary piston (232) is comprised of non-magnetic material. A bore, functioning as a bleed passage (244), is disposed within body (233) and extends therethrough between a first aperture (246) at first end (234) and a second aperture (242) at second end (236). Second aperture (242) defines orifice (243). Aperture (246) opens into flow passage (224), and particularly bore (229). Aperture (242), as well as orifice (243), communicates with flow passage (224) via bleed passage (244). A sealing member (256), such as an o-ring, is carried at the periphery of body (233) between body (233) and sleeve (222) of conduit (211), thereby creating a seal to prevent gas from flowing between orifice (254) and first end (248) of sleeve (222). In this respect, secondary piston (232) is sealingly engaged to conduit (211).

The first end (234) of primary piston (232) includes a valve comprising a sealing surface (238) for closing the orifice (228). The first end (234) is further characterized by a surface (235) exposed to gaseous pressure within pressure vessel (216). The second end (236) includes a valve seat (240). Orifice (243) is disposed in valve seat (240).

As is illustrated in Figure 1, each of orifice (243) and orifice (254) is characterized by a cross-sectional area smaller than that of orifice (228). This facilitates faster unseating of primary piston (231) from valve seat (226) and unsealing of third conduit orifice (228), as will be described below.

In one embodiment, orifice (243) is characterized by a smaller cross-sectional area than orifice (254). This facilitates bleeding of gas from sleeve (222) through bleed passage (244), as will be hereinafter described.

Secondarypiston (231) is disposed between primary piston (232) and first conduit orifice (254). Secondary piston (231) includes a first end (258) and a second end (260). Secondary piston (231) is comprised of magnetic material. First end (258) includes a valve comprising a sealing surface (262) for closing orifice (243). Second end (262) includes a valve comprising a second sealing surface (264) for engaging valve seat (252), thereby closing orifice (254). Resilient member or spring (266) bears against secondary piston (231) to bias secondary piston (231) towards primary piston (232) for pressing first sealing surface (262) against valve seat (240) and thereby close orifice (243). In one embodiment, spring (266) is housed at second end (250) of sleeve (222) and presses against second end (260) of secondary piston (231).

Surrounding sleeve (222) is a solenoid coil (268). Solenoid coil (268) is provided to apply electromagnetic forces on secondary piston (231) by external actuation, thereby causing movement of the secondary piston (231) against the force of spring (266) and fluid pressure forces within sleeve (222).

**Figures 8,9, and 10** illustrate an embodiment of an instant-on valve (210) of the present invention in various conditions of operation. Figure 8 illustrates instant-on valve (210) in a closed position. In this condition, solenoid coil (268) is not energized. Under these circumstances, spring (266) biases secondary piston (231) towards primary piston (232). In this respect, second sealing surface (264) is spaced from orifice (254) of valve seat (252) in sleeve (222), thereby opening orifice (254) to fluid pressure in the pressure vessel (216). Contemporaneously, first sealing surface (262) on secondary piston (231) is pressed against valve seat (240) on primary piston (232), thereby closing orifice (243). Because orifice (254) in sleeve (222) is open to fluid pressure in pressure vessel (216), the spaces between sealing member (256) and orifice (254) are also exposed to fluid pressure of pressure vessel (216). Turning to primary piston (232), first end (234) of primary piston (232) is exposed to fluid pressure within pressure vessel (216) via inlet port (220). These fluid forces, acting upon primary piston (232) are overcome by the combined action of spring (266) and fluid pressure within sleeve (222), the latter forces being translated to primary piston (232) by secondary piston (231). As such, sealing surface (238) on primary piston (232) is pressed against valve seat (226), thereby closing orifice (228).

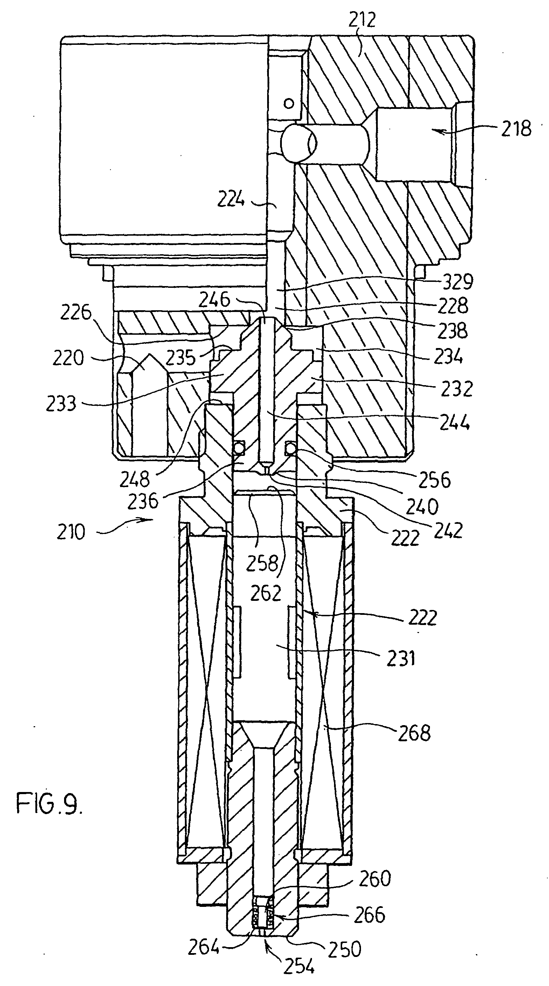

**Figure 9** illustrates instant-on valve (210) in a transition position. Instant-on valve (210) is in a transition position moments after solenoid coil (268) is energized. Moments after solenoid coil (268) is energized, electromagnetic forces produced thereby act upon secondary piston (231) and overcome the forces exerted by spring (266) and gas pressure within sleeve (222), thereby causing second sealing surface (264) in secondary piston (231) to seat against valve seat (252) provided on sleeve (222), thereby closing orifice (254). Simultaneously, first sealing surface (262) on secondary piston (231) retracts from valve seat (240) of primary piston (32), thereby opening orifice (43). By opening orifice (243) in primary piston (232), gas contained within sleeve (222) begins to escape through bleed passage (244) within primary piston (232) via orifice (243) and flow out of instant-on valve (210) through outlet port (218). As this happens, gas pressure within sleeve (222) begins to drop. However, under these conditions, fluid pressure in this region has not dropped sufficiently to unseat primary piston (232) from valve seat (226). This is because the fluid forces acting on the surface of first end (234) of primary piston (232), including fluid forces within bore (229), are still insufficient to overcome fluid forces within sleeve (222) acting upon the surface of second end (236) of primary piston (232).

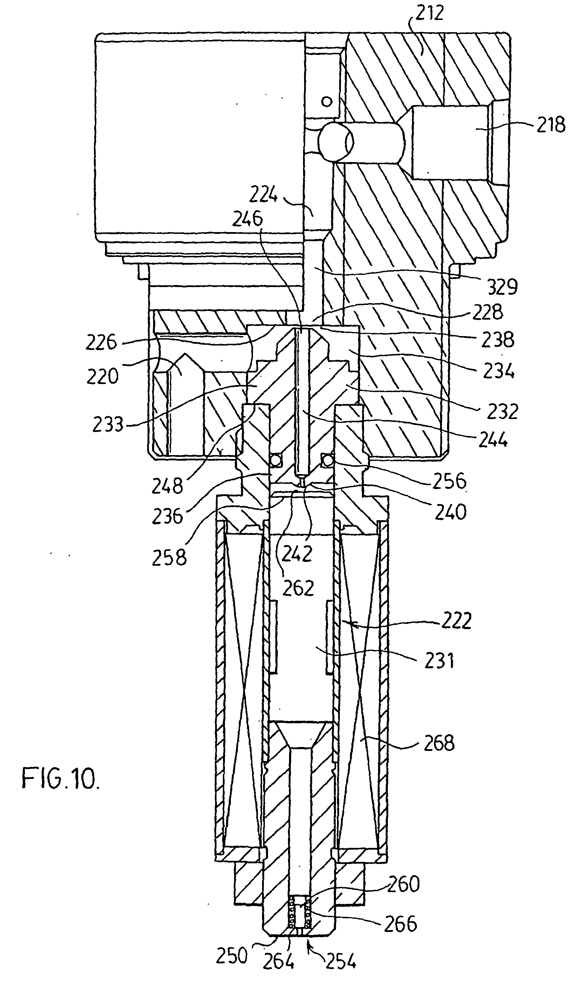

**Figure 10** illustrates instant-on valve (210) in an open position. In this condition, fluid within sleeve (222) between sealing member (256) and orifice (254) has further escaped through bleed passage (244) in primary piston (232). At this point, gaseous forces acting behind the surface of second end (236) have sufficiently subsided to have become overcome by the fluid forces acting upon the surface of first end (234) ofprimary piston (232). In response, sealing surface (238) of primary piston (232) has become unseated from valve seat (226), thereby creating an uninterrupted flow path between the interior of pressure vessel (216) and outlet port (218) via fluid passage (224).

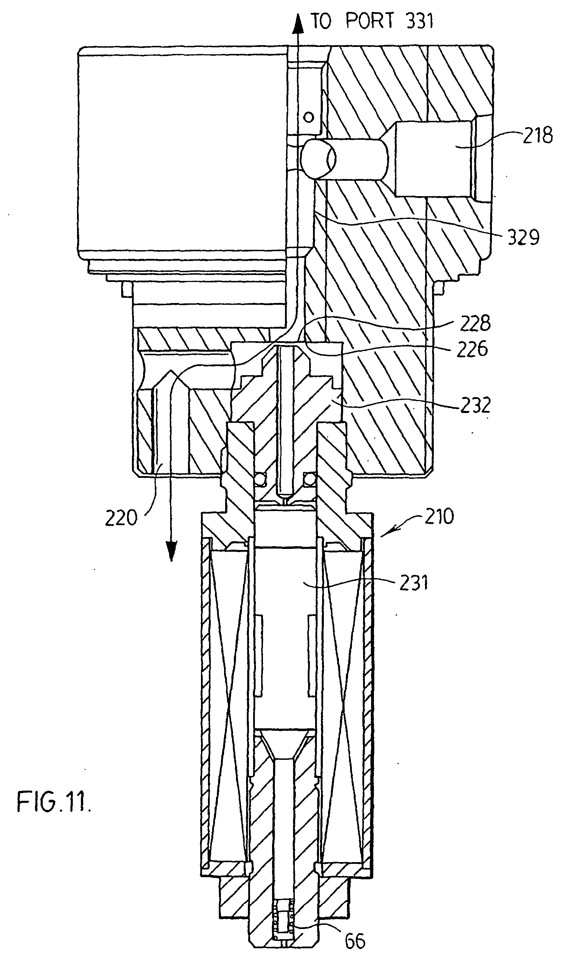

Referring to **Figures 5, 7, 11 and 13** pressure vessel (216) is filled with a gaseous mixture using module (2) through flow passages extending through instant-on valve (210). Gas enters module (2) via inlet port (331), passing through filter (334) (flow direction denoted by arrows (333) in **Figure 13**), and travelling through passage (329) for communication with the interior ofpressure vessel (216) via orifice (228). Gas flowing through orifice (228) presses upon secondary piston (232), causing unseating of secondary piston (232) from valve seat (226) of flow passage (224). As aresult, an uninterrupted flowpath is created between inlet port (331) and the interior of pressure vessel (216). When the filling operation is complete, spring (266) exerts sufficient force on primary piston (231), which is thereby transmitted to secondary piston (232), to cause secondary piston (232) to close orifice (228).

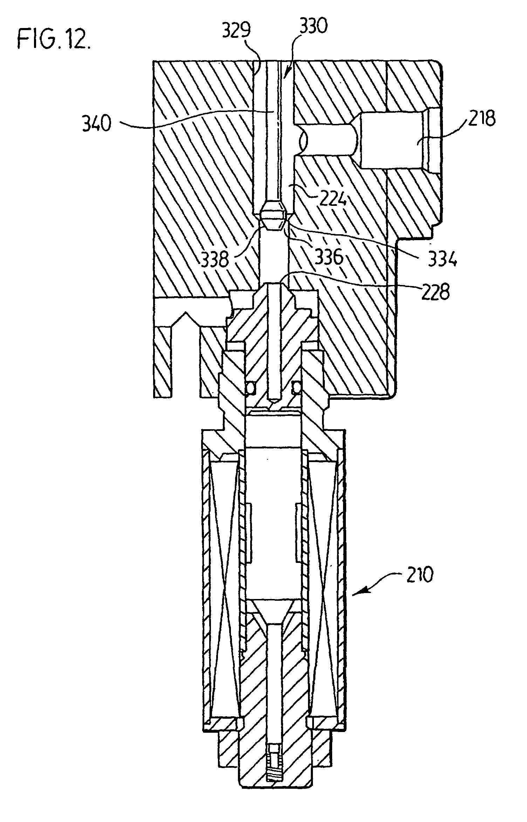

**Figures 5, 7 and 12** illustrates the disposition of manual shut-off valve (330) within passage (329) between outlet port (218) and orifice (228), thereby permitting manual shut-off of fluid passage (224). In this respect, a passage (329) is provided within neck (6), extending from port (342) provided in head (4). Passage (329) includes a second valve seat (334) with an orifice (336) interposed between inlet port (18) of regulator (10) and orifice (228). Manual shut-off valve (330) includes a sealing surface (338) for seating against valve seat (334), thereby closing orifice (336) and blocking flow passage (224) such that communication between regulator (10) and instant-on valve (210) is interrupted. As such, manual shut-off valve (330) is co-axial with the fluid passage used to fill pressure vessel (216). Stem (340) extends from sealing surface (338) and through port (342) via passage (329). Manual actuator (344) is provided at distal end (346) of stem (340) to facilitate closing of flow passage (224) by manual intervention.

Other ports are provided in head (4) to facilitate operation of the above-described components of module (2) (see **Figure 13**). Thermally actuated relief device (348) can be provided within throughbore (352) to vent tank gases in the case of a fire to prevent explosions. Throughbore (352) vents to outlet connection (313) (see **Figures 13 and 14**). Port (354) is also provided with passage (356) extending therefrom, thereby functioning as a wire pass through and permitting electrical connection of instant-on valve (210) exterior to the pressure vessel (216).

As illustrated in **Figures 1, 5 and 7**, module (2) is adapted for mounting within nozzle (217) of pressure vessel (216). Nozzle (217) includes an aperture (227), and is characterized by a longitudinal axis (221). Head (4) extends outside nozzle (217) and, therefore, functions as a cap. Neck (6) depends from head (4) and extends into the interior (219) of pressure vessel (216). In this respect, when module (2) is mounted within nozzle (217) in this manner, each of the regulators (10) and (110) and solenoid shut-off valve (210) are disposed within the interior of (219) of pressure vessel (216). Also, each of moveable pressure boundary members (31) and (131) are oriented such that each of their respective transverse axes (61) and (161) is transverse to longitudinal axis (62) of neck (6) or longitudinal axis (221) of nozzle (217). In one embodiment, the transverse axis (61) or (161) is perpendicular to the longitudinal axis (62) of neck (61). As a further incident, each of moveable pressure boundary members (31) and (131) lies or is disposed substantially in a plane which is parallel to the longitudinal axis (62) of neck (6) or the longitudinal axis (221) of nozzle (217).

Although the disclosure describes and illustrates preferred embodiments of the invention, it is to be understood that the invention is not limited to these particular embodiments. Many variations and modifications will now occur to those skilled in the art. For definition of the invention, reference is to be made to the appended claims.

## Claims

1. **Gas flow regulation module** (2), configured for mounting to a pressure vessel (216) and for insertion through a nozzle (217) provided in the pressure vessel, the nozzle including a longitudinal axis (221), the gas flow regulation module comprising:
(i) a module housing (6), including a first port (336) and a second port (310), a first fluid passage (329) extending from the first port and a second fluid passage (300) extending from the second port;
(ii) at least one regulator (10, 110) disposed within the module housing (6) and disposed in communication with the first and second fluid passages, said at least one regulator (10, 110) including a moveable pressure boundary member (31, 131) **characterized by** a transverse axis (61, 161) which is transverse to the longitudinal axis (221) of the nozzle (217).

2. Gas flow regulation module as claimed in claim 1, wherein said at least one regulator further includes:
a regulator fluid passage (20, 120 and 22, 122) disposed in communication with each of the first and second fluid passages;
an orifice (24, 124) disposed in the regulator fluid passage;
a valve (26, 126) coupled to the moveable pressure boundary member (31, 131) and configured to close the orifice (24, 124), whereby the valve (26, 126) is moveable in response to movement of the moveable pressure boundary member (31,131).

3. Gas flow regulation module as claimed in claim 2, wherein said at least one regulator further includes:
a cavity (46, 146), isolated from the regulator fluid passage by the moveable pressure boundary member (31, 131); and
a resilient member (30, 130) disposed within the cavity and configured to bias the moveable pressure boundary member (31, 131) in a direction to effect closure of the orifice (24, 124) by the valve (26, 126).

4. Gas flow regulation module as claimed in claim 3, wherein the moveable pressure boundary member (31,131) defines a pressure boundary between the cavity (46, 146) and the regulator fluid passage.

5. Gas flow regulation module as claimed in claim 4, wherein the regulator fluid passage includes:
an input chamber (20, 120) communicating with the first fluid
passage (329); and
an output chamber (22, 122) communicating with the second
fluid passage (300);
whereby the input chamber (20, 120) communicates with the output chamber (22, 122) through the orifice (24, 124).

6. Gas flow regulation module as claimed in claim 5, wherein the moveable pressure boundary member (31, 131) is responsive to fluid pressure within the output chamber (22, 122).

7. Gas flow regulation module as claimed in claim 6, wherein said at least one regulator (10, 110) is configured for disposition within the pressure vessel (216).

8. Gas flow regulation module as claimed in claim 6, wherein said at least one regulator is configured for insertion through the nozzle (217) of the pressure vessel (216).

9. Gas flow regulation module as claimed in claim 8, wherein the moveable pressure boundary member is substantially disposed in a plane which is substantially parallel to the longitudinal axis (221) of the nozzle (217).

10. **Method for operating a gas flow regulator module** when inserted through a nozzle (217) provided in a pressure vessel (216), the nozzle (217) including a longitudinal axis (221), the gas flow regulation module comprising:
(i) a module housing (6), including a first port (336) and a second port (310), a first fluid passage (329) extending from the first port (336), and a second fluid passage (300) extending from the second port (310); and disposing
(ii) at least one regulator (10, 110) within the module housing (6) and in communication with the fluid passages, wherein said at least one regulator (10, 110) includes a moveable pressure boundary member (31, 131 ), and disposing it in a plane which is substantially parallel to the longitudinal axis (221) of the nozzle (217).

11. Method as claimed in claim 10, wherein said at least one regulator (10, 110) further includes:
a regulator fluid passage (20, 120 and 22, 122) communicating with each of the first and second fluid passages;
an orifice (24, 124) disposed in the regulator fluid passage;
a pintle valve (26, 126) coupled to the moveable pressure boundary member (31, 131) and closing the orifice (24, 124), whereby the pintle valve is moved in response to movement of the moved pressure boundary member (31,131).

12. Method as claimed in claim 11, wherein said at least one regulator (10, 110) further includes:
a cavity (46, 146), isolated from the regulator fluid passage by the moveable pressure boundary member (31, 131); and
a resilient member (30, 130) disposed within the cavity (46, 146) and biasing the moveable pressure boundary member (31, 131) in a direction to effect closure of the orifice (24, 124) by the valve.

13. Method as claimed in claim 12, wherein the moveable pressure boundary member (31, 131) defines a pressure boundary between the cavity (46, 146) and the regulator fluid passage.

14. Method as claimed in claim 13, wherein the regulator fluid passage includes:
an input chamber (20, 120) communicating with the first fluid
passage (329); and
an output chamber (22, 122) communicating with the second
fluid passage (300);
the input chamber (20, 120) communicating with the output chamber (22, 122) through the orifice (24, 124).

15. Method as claimed in claim 14, wherein the moveable pressure boundary member (31, 131) responds to fluid pressure within the output chamber (22 122).

16. Method as claimed in claim 15, wherein said at least one regulator (10, 110) is disposed within the pressure vessel (216).

17. Method as claimed in claim 16, wherein said at least one regulator (10, 110) is inserted through the nozzle (217) of the pressure vessel (216).

## Patentansprüche

1. **Gasdurchflussregelmodul** (2), ausgebildet an einem Druckgefäß (216) befestigt und über oder durch eine in dem Druckgefäß anwesende Düse (217) eingeführt zu werden, wobei die Düse eine Längsachse (221) aufweist und das Gasdurchflussregelmodul umfasst:
(i) ein Modulgehäuse (6), das eine erste Öffnung (336) und eine zweite Öffnung (310), einen sich von der ersten Öffnung erstreckenden ersten Fluiddurchgang (329) und einen sich von der zweiten Öffnung erstreckenden zweiten Fluiddurchgang (300) umfasst;
(ii) wenigstens einen Regler (10, 110), der im Modulgehäuse (6) und in Verbindung mit dem ersten und zweiten Fluiddurchgang angeordnet ist, wobei der wenigstens eine Regler (10, 110) ein bewegliches Druckbegrenzungselement (31, 131) aufweist, **gekennzeichnet durch** eine Querachse (61, 161), die quer zur Längsachse (221) der Düse (217) verläuft.

2. Gasdurchflussregelmodul nach Anspruch 1, wobei die wenigstens eine Regeleinrichtung ferner umfasst:
einen Reguliereinrichtungsfluiddurchgang (20, 120 und 22, 122), der in Verbindung mit jedem der ersten und zweiten Fluiddurchgänge angeordnet ist, eine Öffnung (24, 124), die in dem Reguliereinrichtungsfluiddurchgang angeordnet ist,
ein Ventil (26, 126), das mit dem beweglichen Druckbegrenzungselement (31, 131) verbunden und dafür ausgelegt ist, die Öffnung (24, 124) zu verschließen, wodurch sich das Ventil (26, 126) in Antwort auf Bewegungen des beweglichen Druckbegrenzungselements (31, 131) bewegen lässt.

3. Gasdurchflussregelmodul nach Anspruch 2, wobei die wenigstens eine Reguliereinrichtung ferner umfasst:
einen Hohlraum (46, 146), der vom Reguliereinrichtungsfluiddurchgang durch
das bewegliche Druckbegrenzungselement (31, 131) getrennt ist, und
ein federndes Element (30, 130), das im Hohlraum angeordnet und dafür ausgelegt ist, das bewegliche Druckbegrenzungselement (31, 131) in eine Richtung vorzuspannen, um die Öffnung (24,124) durch das Ventil (26, 126) zu verschließen.

4. Gasdurchflussregelmodul nach Anspruch 3, wobei das bewegliche Druckbegrenzungselement (31, 131) zwischen dem Hohlraum (46, 146) und dem Reguliereinrichtungsfluiddurchgang eine Druckgrenze definiert.

5. Gasdurchflussregelmodul nach Anspruch 4, wobei der Reguliereinrichtungsfluiddurchgang umfasst:
eine Einlasskammer (20, 120), die mit dem ersten Fluiddurchgang (329) in Verbindung steht, und
eine Auslasskammer (22, 122), die mit dem zweiten Fluiddurchgang (300) in Verbindung steht,
wodurch die Einlasskammer (20,120) über die Öffnung (24, 124) mit der Auslasskammer (22, 122) in Verbindung steht.

6. Gasdurchflussregelmodul nach Anspruch 5, wobei das bewegliche Druckbegrenzungselement (31, 131) auf den Fluiddruck in der Auslasskammer (22, 122) anspricht.

7. Gasdurchflussregelmodul nach Anspruch 6, wobei die wenigstens eine Reguliereinrichtung (10, 110) dafür ausgelegt ist, im Druckgefäß (216) angeordnet zu werden.

8. Gasdurchflussregelmodul nach Anspruch 6, wobei die wenigstens eine Reguliereinrichtung dafür ausgelegt ist, über die Düse (217) des Druckgefäßes (216) eingeführt zu werden.

9. Gasdurchflussregelmodul nach Anspruch 8, wobei das bewegliche Druckbegrenzungselement im Wesentlichen in einer Ebene angeordnet ist, die im Wesentlichen parallel zur Längsachse (221) der Düse (217) verläuft.

10. **Verfahren zum Betreiben eines Gasdurchfluss-Regelmoduls,** wenn dieses über eine in einem Druckgefäß (216) vorgesehene Düse (217) eingeführt ist, wobei die Düse (217) eine Längsachse (221) aufweist und das Gasdurchfluss-Regelmodul umfasst:
(i) ein Modulgehäuse (6), das eine erste Öffnung (336) und eine zweite Öffnung (310), einen sich von der ersten Öffnung (336) erstreckenden ersten Fluiddurchgang (329) und einen sich von der zweiten Öffnung (310) erstreckenden zweiten Fluiddurchgang (300) umfasst, und
(ii) Anordnen wenigstens einer Regeleinrichtung (10, 110) im Modulgehäuse (6) in Verbindung mit den Fluiddurchgängen, wobei die wenigstens eine Regeleinrichtung (10, 110) ein bewegliches Druckbegrenzungselement (31, 131) aufweist, und Anordnen desselben in einer Ebene, die im Wesentlichen parallel zur Längsachse (221) der Düse (217) verläuft.

11. Verfahren nach Anspruch 10, wobei die wenigstens eine Reguliereinrichtung (10, 110) ferner umfasst:
einen Reguliereinrichtungsfluiddurchgang (20, 120 und 22, 122), der in Verbindung mit jedem der ersten und zweiten Fluiddurchgänge angeordnet ist,
eine Öffnung (24, 124), die in dem Reguliereinrichtungsfluiddurchgang angeordnet ist,
ein Zapfenventil (26, 126), das mit dem beweglichen Druckbegrenzungselement (31, 131) verbunden und dafür ausgelegt ist, die Öffnung (24, 124) zu verschließen, wodurch sich das Zapfenventil in Antwort auf Bewegungen des beweglichen Druckbegrenzungselements (31, 131) bewegen lässt.

12. Verfahren nach Anspruch 11, wobei die wenigstens eine Reguliereinrichtung (10, 110) ferner umfasst:
einen Hohlraum (46, 146), der vom Reguliereinrichtungsfluiddurchgang durch das bewegliche Druckbegrenzungselement (31, 131) getrennt ist, und
ein nachgiebiges Element (30, 130), das im Hohlraum (46, 146) angeordnet und dafür ausgelegt ist, das bewegliche Druckbegrenzungselement (31, 131) in eine Richtung vorzuspannen, um die Öffnung (24, 124) durch das Ventil zu verschließen.

13. Verfahren nach Anspruch 12, wobei das bewegliche Druckbegrenzungselement (31, 131) zwischen dem Hohlraum (46, 146) und dem Reguliereinrichtungsfluiddurchgang eine Druckgrenze definiert.

14. Verfahren nach Anspruch 13, wobei der Reguliereinrichtungsfluiddurchgang umfasst:
eine Einlasskammer (20, 120), die mit dem ersten Fluiddurchgang (329) in Verbindung steht, und
eine Auslasskammer (22, 122), die mit dem zweiten Fluiddurchgang (300) in Verbindung steht,
wodurch die Einlasskammer (20, 120) über die Öffnung (24, 124) mit der Auslasskammer (22, 122) in Verbindung steht.

15. Verfahren nach Anspruch 14, wobei das bewegliche Druckbegrenzungselement (31, 131) auf den Fluiddruck in der Auslasskammer (22, 122) anspricht.

16. Verfahren nach Anspruch 15, wobei die wenigstens eine Reguliereinrichtung (10, 110) dafür ausgelegt ist, im Druckgefäß (216) angeordnet zu werden.

17. Verfahren nach Anspruch 16, wobei die wenigstens eine Reguliereinrichtung (10, 110) dafür ausgelegt ist, über die Düse (217) des Druckgefäßes (216) eingeführt zu werden.

## Revendications

1. Module (2) de régulation d'écoulement de gaz, configuré pour montage sur un récipient sous pression (216), et pouvant être introduit par introduction à travers une buse (217) disposée dans le récipient sous pression, la buse incluant un axe longitudinal (221), le module de régulation d'écoulement de gaz comprenant :
(i) un boîtier (6) de module, incluant un premier orifice (336) et un second orifice (310), un premier passage (329) de fluide s'étendant à partir du premier orifice et un second passage (300) de fluide s'étendant à partir du second orifice ;
(ii) au moins un régulateur (10, 110) disposé à l'intérieur du boîtier (6) de module et disposé en communication avec les premier et second passages de fluide, ledit au moins un régulateur (10, 110) incluant un élément mobile (31, 131) de limitation de pression **caractérisé par** un axe transversal (61, 161) qui est transversal à l'axe longitudinal (221) de la buse (217).

2. Module de régulation d'écoulement de gaz selon la revendication 1, dans lequel ledit au moins un régulateur comprend en outre :
un passage (20, 120 et 22, 122) de fluide de régulateur disposé en communication avec chacun des premier et second passages de fluide ;
un orifice (24, 124) disposé dans le passage de fluide de régulateur ;
une vanne (26, 126) couplée à l'élément mobile (31, 131) de limitation de pression et configurée pour fermer l'orifice (24, 124), ce par quoi la vanne (26, 126) est mobile en réponse au déplacement de l'élément mobile (31, 131) de limitation de pression.

3. Module de régulation d'écoulement de gaz selon la revendication 2, dans lequel ledit au moins un régulateur inclut en outre :
une cavité (46, 146) isolée du passage de fluide de régulateur par l'élément mobile (31, 131) de limitation de pression ; et
un élément élastique (30, 130) disposé à l'intérieur de la cavité et configuré pour rappeler l'élément mobile (31, 131) de limitation de pression dans un sens pour que la vanne (26, 126) ferme l'orifice (24, 124).

4. Module de régulation d'écoulement de gaz selon la revendication 3, dans lequel l'élément mobile (31, 131) de limitation de pression définit une limite de pression entre la cavité (46, 146) et le passage de fluide de régulateur.

5. Module de régulation d'écoulement de gaz selon la revendication 4, dans lequel le passage de fluide de régulateur inclut :
une chambre (20, 120) d'entrée communiquant avec le premier passage (329) de fluide ; et
une chambre (22, 122) de sortie communiquant avec le second passage (300) de fluide ;
ce par quoi la chambre (20, 120) d'entrée communique avec la chambre (22, 122) de sortie par l'intermédiaire de l'orifice (24, 124).

6. Module de régulation d'écoulement de gaz selon la revendication 5, dans lequel l'élément mobile (31, 131) de limitation de pression est sensible à une pression de fluide à l'intérieur de la chambre (22, 122) de sortie.

7. Module de régulation d'écoulement de gaz selon la revendication 6, dans lequel ledit au moins un régulateur (10, 110) est configuré pour disposition à l'intérieur du récipient sous pression (216).

8. Module de régulation d'écoulement de gaz selon la revendication 6, dans lequel ledit au moins un régulateur est configuré pour introduction à travers la buse (217) du récipient sous pression (216).

9. Module de régulation d'écoulement de gaz selon la revendication 8, dans lequel l'élément mobile de limitation de pression est sensiblement disposé dans un plan qui est sensiblement parallèle à l'axe longitudinal (221) de la buse (217).

10. Procédé de mise en oeuvre d'un module de régulateur d'écoulement de gaz lorsqu'il est introduit à travers une buse (217) disposée dans un récipient sous pression (216), la buse (217) incluant un axe longitudinal (221), le module de régulation d'écoulement de gaz comprenant :
(i) un boîtier (6) de module, incluant un premier orifice (336) et un second orifice (310), un premier passage (329) de fluide s'étendant à partir du premier orifice (336), et un second passage (300) de fluide s'étendant à partir du second orifice (310) ; et la disposition
(ii) d'au moins un régulateur (10, 110) à l'intérieur du boîtier (6) de module et en communication avec les passages de fluide, dans lequel ledit au moins un régulateur (10, 110) inclut un élément mobile (31, 131) de limitation de pression, et la disposition de celui-ci dans un plan qui est sensiblement parallèle à l'axe longitudinal (221) de la buse (217).

11. Procédé selon la revendication 10, dans lequel ledit au moins un régulateur (10, 110) inclut en outre :
un passage (20, 120 et 22, 122) de fluide de régulateur disposé en communication avec chacun des premier et second passages de fluide ;
un orifice (24, 124) disposé dans le passage de fluide de régulateur ;
une vanne à téton (26, 126) couplée à l'élément mobile (31, 131) de limitation de pression et configurée pour fermer l'orifice (24, 124), ce par quoi la vanne à téton est mobile en réponse au déplacement de l'élément mobile (31, 131) de limitation de pression.

12. Procédé selon la revendication 11, dans lequel ledit au moins un régulateur (10, 110) inclut en outre :
une cavité (46, 146), isolée du passage de fluide de régulateur par l'élément mobile (31, 131) de limitation de pression ; et
un élément élastique (30, 130) disposé à l'intérieur de la cavité (46, 146) et configuré pour rappeler l'élément mobile (31, 131) de limitation de pression dans un sens pour que la vanne ferme l'orifice (24, 124).

13. Procédé selon la revendication 12, dans lequel l'élément mobile (31, 131) de limitation de pression définit une limite de pression entre la cavité (46, 146) et le passage de fluide de régulateur.

14. Procédé selon la revendication 13, dans lequel le passage de fluide de régulateur inclut :
une chambre (20, 120) d'entrée en communication avec le premier passage (329) de fluide ; et
une chambre (22, 122) de sortie en communication avec le second passage (300) de fluide ;
ce par quoi la chambre (20, 120) d'entrée communique avec la chambre (22, 122) de sortie par l'intermédiaire de l'orifice (24, 124).

15. Procédé selon la revendication 14, dans lequel l'élément mobile (31, 131) de limitation de pression est sensible à une pression de fluide à l'intérieur de la chambre (22, 122) de sortie.

16. Procédé selon la revendication 15, dans lequel ledit au moins un régulateur (10, 110) est configuré pour disposition à l'intérieur du récipient sous pression (216).

17. Procédé selon la revendication 16, dans lequel ledit au moins un régulateur (10, 110) est configuré pour introduction à travers la buse (217) du récipient sous pression (216).
